# EUROPEAN PATENT SPECIFICATION

(11) **EP 0 666 102 B1**
(45) Date of publication and mention of the grant of the patent: **07.11.2001**
(21) Application number: 95101490.1
(22) Date of filing: 03.02.1995
(51) Int. Cl.: B01D 53/94

(54) **Process for producing an exhaust gas purification catalyst**
Verfahren zur Herstellung eines Abgasreinigungskatalysators
Procédé pour la préparation d'un catalyseur pour la purification de gaz d'échappement

(30) Priority: 04.02.1994 JP 1274794
(43) Date of publication of application: 09.08.1995
(73) Proprietor: TOYOTA JIDOSHA KABUSHIKI KAISHA, Aichi-ken 471-8571 (JP)
(72) Inventor: Suzuki, Hiromasa, c/o Toyota Jidosha K.K., Aichi-ken 471 (JP)
(74) Representative: Winter, Brandl, Fürniss, Hübner, Röss, Kaiser, Polte Partnerschaft

(56) References cited:
- EP-A- 0 210 681
- EP-A- 0 540 280
- EP-A- 0 573 672
- EP-A- 0 580 389
- EP-A- 0 597 106
- EP-A- 0 598 916
- DE-A- 4 319 294
- JP-A- 4 367 707
- DATABASE WPI Section Ch, Week 7344 Derwent Publications Ltd., London, GB; Class H06, AN 73-66285u & JP-A-48 055 190 (HITACHI-MAXELL LTD)
- PATENT ABSTRACTS OF JAPAN vol. 014 no. 030 (C-678) ,19 January 1990 & JP-A-01 266851 (RES DEV CORP OF JAPAN;OTHERS: 01) 24 October 1989,

## Description

### BACKGROUND OF THE INVENTION

### Field of the Invention

The present invention relates to a process for purifying exhaust gases. More particularly, it relates to the process which can efficiently purify nitrogen oxides (NOₓ) in the exhaust gases whose oxygen concentrations are at the stoichiometric point or more than required for oxidizing carbon monoxide (CO) and hydrocarbons (HC) therein.

### Description of Related Art

As catalysts for purifying automotive exhaust gases, there have been employed 3-way catalysts so far which oxidize CO and HC and reduce NOₓ to purify the exhaust gases. For example, the 3-way catalysts have been known widely which comprise a heat resistant support formed of cordierite, a catalyst carrier layer formed of gamma-alumina and disposed on the support, and a noble metal catalyst ingredient selected from the group consisting of Pt, Pd and Rh and loaded on the catalyst carrier layer.

The purifying performance of the 3-way catalysts for purifying exhaust gases depends greatly on the air-fuel ratio A/F of automotive engine. For instance, when the air-fuel weight ratio is larger than 14.6, i.e., when the fuel concentration is low (or on the fuel-lean side), the oxygen concentration is high in exhaust gases. Accordingly, the oxidation reactions purifying CO and HC are active, but the reduction reactions purifying NOₓ are inactive. On the other hand, when the air-fuel ratio is smaller than 14.6, i.e., when the fuel concentration is higher (or on the fuel-rich side), the oxygen concentration is low in exhaust gases. Accordingly, the oxidation reactions are inactive, but the reduction reactions are active.

Moreover, when driving automobiles, especially when driving automobiles in urban areas, the automobiles are accelerated and decelerated frequently. Consequently, the air-fuel ratio varies frequently in the range of from the values adjacent to the stoichiometric point (or the theoretical air-fuel ratio: 14.6) to the fuel-rich side. In order to satisfy the low fuel consumption requirement during the driving conditions such as in the above-described urban areas, it is necessary to operate the automobiles on the fuel-lean side where the air-fuel mixture containing oxygen as excessive as possible is supplied to the engines. Hence, it has been desired to develop a catalyst which is capable of adequately purifying NOₓ even on the fuel-lean side (i.e., in the oxygen-rich atmospheres).

In view of the aforementioned circumstances, the applicant et al. of the present invention applied for a Japanese Patent for a novel catalyst under Japanese Patent Application No. 4-130,904 (Japanese Unexamined Patent Publication (KOKAI) No. 5-317,652). On this catalyst, there are loaded an alkaline-earth metal oxide and Pt. In the catalyst, during the fuel-lean side (i.e., in the oxygen-rich atmospheres) driving, NOₓ, which includes NO in an amount of about 90% by volume and the balance of NO₂ etc., is adsorbed on the alkaline-earth metal elements. For instance, the NO is oxidized to NO₂ by the Pt, and the resulting NO₂ is adsorbed on the alkaline-earth metal elements. When the air-fuel mixture varies from the stoichiometric point to the fuel-rich states, the adsorbed NOₓ is released from the alkaline-earth metal elements, and it is reacted with the reducing gas like HC by the action of the Pt. Thus, NOₓ is reduced and purified to N₂. As a result, the catalyst exhibits superb NOₓ purifying performance during the fuel-lean side (i.e., in the oxygen-rich atmospheres) driving.

The catalyst proposed in Japanese Unexamined Patent Publication (KOKAI) No. 5-317,652 is believed to provide the advantageous effect as follows: the alkaline-earth metal oxides, for example, barium oxide loaded on the support, react with NOₓ to produce nitrates, e.g., Ba(NO₃)₂. Thus, NOₓ is adsorbed on the support of the catalyst in the form of the alkaline-earth metal nitrates.

However, the exhaust gases usually contain SO₂ which is produced by burning sulfur (S) contained in the fuel. Further, the catalyst ingredient (e.g., Pt or the like) oxidizes SO₂ to SO₃ in the oxygen-rich atmospheres (i.e., on the fuel-lean side). Still further, SO₃ reacts readily with water vapor also contained in the exhaust gases to produce sulfuric acid. It has been revealed that the resulting sulfuric acid reacts with the alkaline-earth metal elements to produce alkaline-earth metal sulfites and alkaline-earth metal sulfates, thereby poisoning and degrading the alkaline-earth metal elements. Specifically, when the alkaline-earth metal elements are turned into the sulfites and sulfates, they hardly adsorb NOₓ thereon. As a result, the catalyst proposed in Japanese Unexamined Patent Publication (KOKAI) No. 5-317,652 might suffer from a drawback in that it is deteriorated in terms of the NOₓ purifying performance after it is subjected to a durability test.

EP A 0540280 discloses an NOₓ adsorbent comprising a barium-copper-composite including a carrier constituted of alumina which carries at least one kind of material selected from the group consisting of alkali metals, alkaline-earth metals, and rare earth metals and further the carrier carries at least one kind of metal selected from the group consisting of noble metals and transition metals including copper. The amount of the carried metal is not disclosed. EP A 0210681 discloses a catalyst comprising a spinel (MgAl₂O₄ or MgO·Al₂O₃) in which metal being selected from the group consisting of Cu, Co, Ni, Zn and Fe is changed to be composite. In the spinel structure, Mg is mingled into a crystalline lattice of Al₂O₃ so that it never contributes to an adsorption of NOₓ. JP A 4367707 discloses a catalyst for removing NO_{X} in ventilation gases in a tunnel. NO in exhaust gases is mixed with ozone and oxidized to be NO₂ and NO₂ is adsorbed to the catalyst.

### SUMMARY OF THE INVENTION

The present invention has been developed in view of the aforementioned circumstances. It is therefore an object of the present invention to inhibit NOₓ adsorbents (e.g., alkaline-earth metals or the like) from being poisoned and degraded by sulfur, thereby purifying NOₓ efficiently in exhaust gases of oxygen-rich atmospheres even after a durability test.

In accordance with a first aspect of the present invention, there is proposed a process for producing an exhaust gas purifying catalyst which is simultaneously removing carbon monoxide, hydrocarbons and nitrogen oxides contained in said exhaust gas, by
preparing a support including a porous substance;
loading at least one NOₓ adsorbent selected from the group consisting of alkaline-earth metals, rare-earth elements and alkali metals; on the support; and separately
loading at least one element selected from the group consisting of copper in an amount of 0.1 mol/L to 0.5 mol/L with respect of 1 liter of the support and cobalt in an amount of 0.1 mol/L to 0.3 mol/L with respect to 1 liter of the support on the support.

By the exhaust gas purifying catalyst obtained by said process the majority of the nitrogen oxides (NOₓ) in the exhaust gas are adsorbed into the NOₓ adsorbent on the support under an oxygen-rich atmosphere in which oxidizing elements are excess of stoichiometric point which is required for oxidizing non-oxidizing elements in the exhaust gas, and the nitrogen oxides (NOₓ) adsorbed into the NOₓ adsorbent on the support are released and purified by the reaction with the carbon monoxide and hydrocarbons in the exhaust gas under stoichiometric point air-fuel ratio or a fuel-rich atmosphere in which oxidizing elements are below stoichiometric point which is required for oxidizing non-oxidizing elements in the exhaust gas.

Although the catalyst prepared by the process according to the first aspect of the present invention may exhibit, compared to the catalyst disclosed in Japanese Unexamined Patent Publication (KOKAI) No. 5-317,652 and including Pt and alkaline-earth metal loaded thereon, low maximum NOₓ conversion in the fuel-lean side (i.e., in the oxygen-rich atmospheres) driving, it can exhibit NOₓ conversion less likely to deteriorate in the fuel-lean side (i.e., in the oxygen-rich atmospheres) driving even after the employed catalyst is subjected to a durability test. Thus, in accordance with the first aspect of the present invention, the catalyst prepared by the present process can purify NOₓ for a long period of time. The advantageous effect is believed to be effected by the following mechanism.

Cu and Co have lower oxidation activity than Pt does. Accordingly, SO₂ is flowed to the downstream side without being oxidized. As a result, the NOₓ adsorbent little reacts with SO₃ to produce its sulfate, and can stably adsorb NOₓ thereon. Although the Cu and Co do not have oxidation activity as high as that of the Pt, they have oxidation activity which can oxidize NO, one of the major components of NOₓ, to produce NO₂ which is likely to be adsorbed on the NOₓ adsorbent. In other words, NO is hardly adsorbed on the NOₓ adsorbent as it is, but, after it is oxidized to NO₂ by the Pt or the like, it can be adsorbed on the NOₓ at last. The Cu and Co have the oxidizing catalytic activity so that they carry out the reaction: NO + 0 = NO₂. Thus, NOₓ adsorbent can securely adsorb NOₓ thereon on the fuel-lean side. Then, in the running conditions of vehicle engine ranging from the driving at the stoichiometric point to the fuel-rich side (i.e., in the oxygen-lean atmospheres) driving, the NOₓ adsorbent releases NOₓ which has been adsorbed thereon in the fuel-lean side (i.e., in the oxygen-rich atmospheres) driving. The catalytic action of the Cu and Co reduces and purifies the thus released NOₓ to N₂, thereby reacting NOₓ with CO and HC in the exhaust gases and simultaneously oxidizing and purifying the CO and HC. By this type of mechanism, the NOₓ adsorbing ability of the employed catalyst can be kept for a prolonged period of time, and the high activity thereof can be maintained as well.

As for the porous substance, the following can be listed as examples: alumina, zeolite, zirconia, silica-alumina, silica and the combinations of them. These porous substances themselves can constitute a support, or they can be coated on a surface of a honeycomb body made from cordierite, heat resistant metal, etc.

As for a loading amount of the copper, it is preferable to load the copper in an amount of from 0.1 to 3.0 moles with respect to 1 liter of the support. As for a loading amount of the cobalt, it is proposed to load the cobalt in an amount of from 0.1 to 3.0 moles with respect to 1 liter of the support.

As for the NOₓ adsorbent, it is possible to employ at least one element selected from the group consisting of alkaline-earth metals, rare-earth elements and alkali metals. The alkaline-earth metal can be Ba, Sr, Ca and the like. The rare-earth element can be La, Y, Ce and the like. The alkali metal can be Li, K, Na and the like. Unless otherwise specified, the term, "rare-earth elements," herein includes not only the chemical elements with atomic numbers 58 through 71, but also ₃₉Y and ₅₇La.

As for a loading amount of the NOₓ adsorbent, it is preferable to load the NOₓ adsorbent in an amount of from 0.1 to 1.0 mole, further preferably from 0.1 to 0.3 moles, with respect to 1 liter of the support.

In the catalyst produced by the present process according to the first aspect of the present invention, the Co may possibly react with the alumina or the NOₓ adsorbent at about 800 °C to produce certain compounds. When such compounds are produced, the Co as well as the NOₓ adsorbent may lose their inherent functions. Consequently, no improvement may possibly be expected in terms of the NOₓ conversion after a durability test.

In order to overcome this possible drawback, there is further proposed, in accordance with a second aspect of the present invention, a process for producing an exhaust gas purifying catalyst which is simultaneously removing carbon monoxide, hydrocarbons and nitrogen oxides contained in said exhaust gas, by
preparing a cobalt-aluminate support wherein cobalt is dissolved in alumina in amount of from 0.3 to 0.7 moles with respect to 1 liter of the cobalt-aluminate support; and
loading at least one NOₓ adsorbent selected from the group consisting of alkaline-earth metals, rare-earth elements and alkali metals on the cobalt-aluminate support.

By the exhaust gas catalyst obtained by said process of the second aspect of the present invention the majority of the nitrogen oxides (NOₓ) in the exhaust gas are adsorbed into the NOₓ adsorbent on the cobalt-aluminate support under an oxygen-rich atmosphere in which oxidizing elements are excess of stoichiometric point which is required for oxidizing non-oxidizing elements in the exhaust gas, and the nitrogen oxides (NOₓ) adsorbed into the NOₓ adsorbent on the cobalt-aluminate support are released and purified by the reaction with the carbon monoxide and hydrocarbons in the exhaust gas under stoichiometric point air-fuel ratio or a fuel-rich atmosphere in which oxidizing elements are below stoichiometric point- which is required for oxidizing non-oxidizing elements in the exhaust gas.

The catalyst produced by the present process according to the second aspect of the present invention comprises the support including cobalt-aluminate with the NOₓ adsorbent (e.g., Ba etc.) loaded thereon. With this arrangement, when purifying an exhaust gas, it is possible to inhibit the Co from reacting with the alumina in the employed catalyst and accordingly to inhibit the NOₓ conversion from deteriorating after a durability test.

Although one may foresee a possibility that the inherent catalytic action of the Co, for instance, its action of oxidizing NO in the exhaust gases and reducing the released NO₂, degrades on certain occasions, it is possible to avoid the possibility by controlling the dissolving amount of the Co. When the Co dissolving amount is thus controlled, it is possible to produce an advantageous effect which is equivalent to that produced by loading Co in the form of the simple substance. For example, it is preferable to dissolve the Co in the alumina in an amount of from 0.3 to 0.5 moles, with respect to 1 liter of the cobalt-aluminate support.

In addition, in accordance with the second aspect of the present invention, though reasons are still under investigation, the following advantageous effects are provided. That is, since the catalyst comprises the cobalt-aluminate support, the NOₓ adsorbent, such as Ba and the like, can be inhibited from reacting with the alumina, and accordingly its NOₓ adsorbing capability can be inhibited from degrading.

Likewise, in the second aspect of the present invention, the cobalt-aluminate itself can constitute a support, or it can be coated on a surface of a honeycomb body made from cordierite, heat resistant metal, etc.

Similarly, in the second aspect of the present invention, the aforementioned specific alkaline-earth metals, rare-earth elements, alkali metals and the combinations thereof can constitute the NOₓ adsorbent. The NOₓ adsorbent is also preferably loaded in the amount of from 0.1 to 1.0 mole, further preferably from 0.1 to 0.3 moles, with respect to 1 liter of the cobalt-aluminate support.

Thus, the catalyst prepared in accordance with the first and second aspects of the present invention can be inhibited from suffering from the deterioration resulting from the NOₓ adsorbent which is poisoned and degraded by the sulfur contained in the exhaust gases. That is, the first and second aspects of the present invention enable the employed catalyst to exhibit superb NOₓ purifying performance even after a durability test and to stably and efficiently purify NOₓ during the fuel-lean side (i.e., the oxygen-rich atmospheres) driving.

### DETAILED DESCRIPTION OF THE PREFERRED EMBODIMENTS

Having generally described the present invention, a further understanding can be obtained by reference to the specific preferred embodiments which are provided herein for purposes of illustration only and are not intended to limit the scope of the appended claims.

The present invention will be hereinafter described in detail with reference to the preferred embodiments along with comparative examples. Unless otherwise specified, the term, "parts," hereinafter means "parts by weight."

### First Preferred Embodiment

### (Preparation of Catalyst)

100 parts of an alumina powder, 70 parts of alumina sol containing alumina in an amount of 10% by weight, 15 parts of an aluminum nitrate aqueous solution containing aluminum nitrate in an amount of 40% by weight, and 30 parts of water were mixed, thereby preparing a slurry for coating.

Then, a plurality of honeycomb supports formed of cordierite were immersed into the slurry, and thereafter each of them was blown to blow away the slurry in excess. After the blowing, each of the supports was dried at 80 °C for 20 minutes, and thereafter each of them was calcinated at 600 °C for 1 hour, thereby forming an alumina coating layer. The coating layer was thus coated on the honeycomb support in an amount of 120 grams with respect to 1 liter of the honeycomb support.

Each of the honeycomb supports having the coating layer was immersed into a copper nitrate aqueous solution, and each of them was blown to blow away the water droplets in excess. After the blowing, each of the supports was dried at 110 °C, and thereafter each of them was calcinated at 600 °C for 1 hour, thereby loading Cu thereon. The loading amount of Cu was 0.1 mole, defined by moles of the metallic component, with respect to 120 grams of the alumina coating layer.

Then, each of the honeycomb supports with Cu loaded was immersed into a barium acetate aqueous solution having a predetermined concentration, and thereafter each of them was blown to blow away the water droplets in excess. After the blowing, each of them was dried at 110 °C, and thereafter each of them was calcinated at 600 °C for 1 hour, thereby preparing catalysts identified with No. 1 in Table 1 below. The loading amount of Ba was 0.3 moles, defined by moles of the metallic component, with respect to 120 grams of the alumina coating layer.

Further, by following the same procedure as described above, two catalysts identified with Nos. 2 and 3 in Table 1 were prepared, on catalysts which Cu was loaded in an amount of 0.3 moles and 0.5 moles, defined by its metallic component, with respect to 120 grams of the alumina coating layer, respectively.

Furthermore, except that a cobalt acetate aqueous solution was used instead of the copper nitrate aqueous solution, another two catalysts identified with Nos. 4 and 5 in Table 1 were prepared in the aforementioned manner, on catalysts which Co was loaded in an amount of 0.1 mole and 0.3 moles, defined by its metallic component, with respect to 120 grams of the alumina coating layer, respectively. Ba was loaded on each of the catalysts in an identical amount.

Moreover, except that Sr, K and La substituted for the Ba, still, another three catalysts identified with Nos. 6, 7 and 8 in Table 1 were prepared in the aforementioned manner, on catalysts which Co was loaded in the same amount as that of catalyst No. 5.

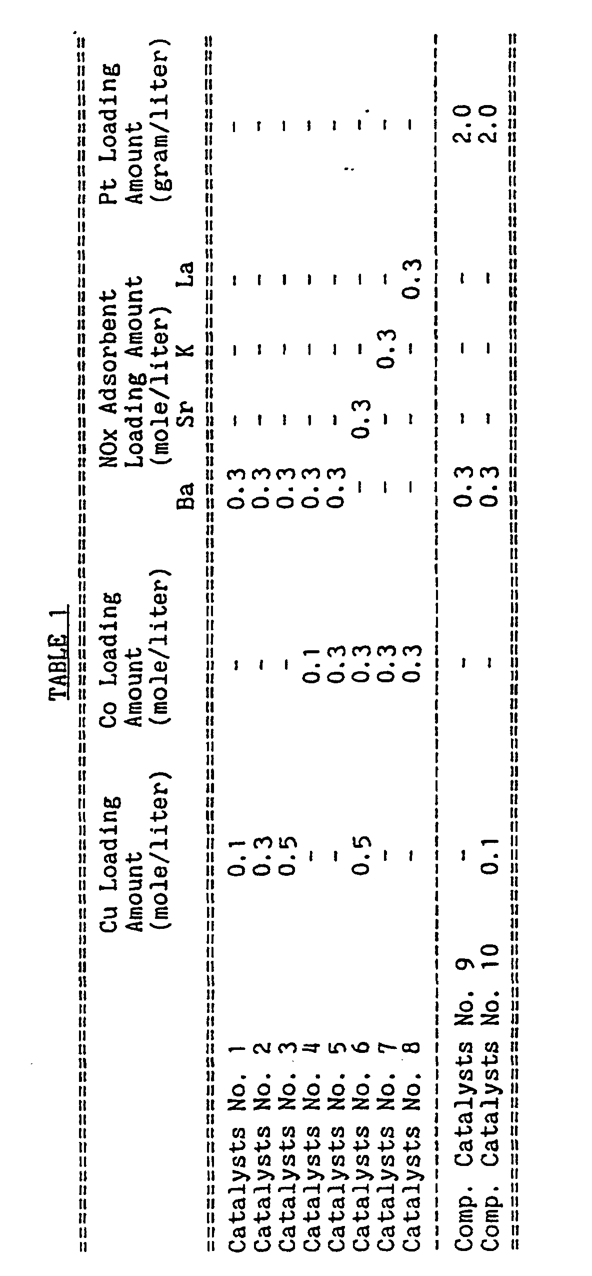

In addition, the following comparative examples were prepared:
except that a platinum dinitrodiammine aqueous solution was used instead of the copper nitrate aqueous solution, comparative catalysts identified with No. 9 in Table 1 were prepared in the same manner as catalyst No. 1, on comparative catalysts which Pt was loaded in an amount of 2.0 grams, defined by its metallic component, with respect to 120 grams of the alumina coating layer; and
except that, after loading the Cu in the same manner as catalysts No. 1, a platinum dinitrodiammine aqueous solution was further used in the same manner as comparative catalysts No. 9, comparative catalysts identified with No. 10 in Table 1 were prepared.

Note that, in comparative catalysts Nos. 9 and 10, the Ba was loaded in the same amount as those of catalysts Nos. 1 through 5.

Table 1 sets forth loaded metals and their loading amounts in catalysts Nos. 1 through 8 as well as in comparative catalysts Nos. 9 and 10.

### Examination for Purifying Performance

Each of catalysts Nos. 1 through 8 as well as comparative catalysts Nos. 9 and 10, and a heat exchanger were disposed in an exhaust line of an actual vehicle equipped with a lean burn engine. The lean burn engine had a displacement of 1.6 liters. The vehicle was driven so as to vary the air-fuel mixture in a pulsating manner. For instance, the air-fuel mixture was varied alternately from a fuel-lean state whose air-fuel ratio A/F was held at 20 for 2 minutes to a stoichiometric state whose air-fuel ratio A/F was held at 14.6 for 2 minutes. The exhaust gases were introduced into each of the catalysts at a temperature of from 200 to 500 °C, and the NOₓ conversion was examined at intervals of 50 °C.

After the aforementioned examination, each of catalysts Nos. 1 through 8 as well as comparative catalysts Nos. 9 and 10 was subjected to a bench test on durability which utilized the same type of engine as above. Namely, each of the catalysts was disposed in an exhaust line of the engine, and then the engine was run at an air-fuel ratio A/F of 18 for 50 hours while adjusting the temperature of the exhaust gas introduced into each of them at 650 °C. After this bench test was over, each of the catalysts was again disposed in the exhaust line of the actual vehicle. The vehicle was driven in the same manner as described above, thereby examining the catalysts for the conversion of NOₓ after a durability test. In the bench test on durability, a fuel was used which contained sulfur in an amount of 70 ppm. The results of these examinations for the NOₓ conversion are summarized in Table 2 below. In Table 2, the initial NO_{X} conversions are listed in the columns designated at "INC" (i.e., Initial NOₓ Conversion), the NOₓ conversions after the durability-test are listed in the columns designated at "NCDT" (i.e., NOₓ Conversion after a Durability Test), and the values are expressed in %.

It is appreciated from Table 2 that, concerning the initial NOₓ conversion, the exhaust-gases-purifying process using the catalyst obtained according to the First Preferred Embodiment employing catalysts Nos. 1 through 8 was inferior to the comparative exhaust-gases-purifying process employing comparative catalysts Nos. 9 and 10. However, it is also understood from Table 2 that, concerning the deterioration of the NOₓ conversion after the durability test, the exhaust-gases-purifying process using the catalyst obtained according to the First Preferred Embodiment exhibited the NOₓ conversion, which was far less likely to deteriorate than the NOₓ conversion exhibited by the comparative exhaust-gases-purifying process, after the durability test. Thus, concerning the NOₓ conversion after the durability test, the exhaust-gases-purifying process using the catalyst obtained according to the First Preferred Embodiment was superior to the comparative exhaust-gases-purifying process.

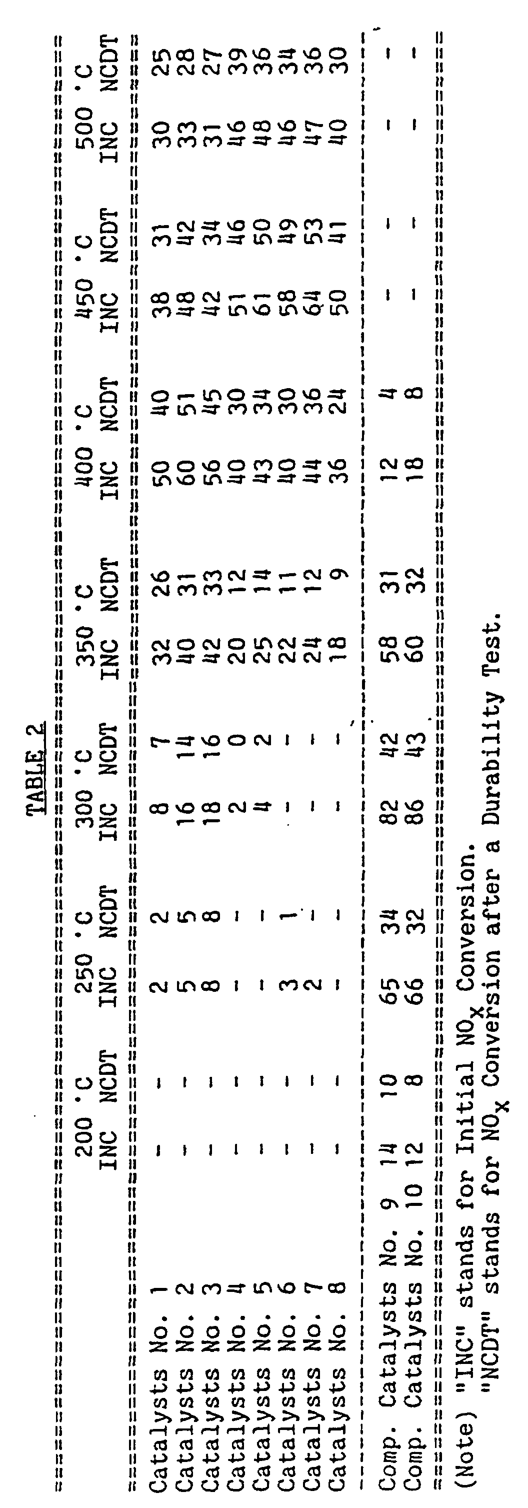

Moreover, the temperature window was placed at higher-temperature sides by the exhaust-gases-purifying process using the catalyst obtained according to the First Preferred Embodiment than by the comparative exhaust-gases-purifying process. Accordingly, the exhaust-gases-purifying process using the catalyst obtained according to the First Preferred Embodiment enables to dispose an exhaust-gases-purifying catalyst directly behind a vehicle engine. It has been difficult so far to dispose and use an exhaust-gases-purifying catalyst in such a manner.

### Second Preferred Embodiment

The honeycomb support having the alumina coating layer and prepared in the same manner as in the First Preferred Embodiment was also employed to produce catalysts according to the Second Preferred Embodiment.

Each of the honeycomb supports having the alumina coating layer was immersed into a cobalt nitrate aqueous solution having a predetermined concentration. After taking each of the supports out of the aqueous solution, each of them was blown to blow away the water droplets in excess. After the blowing, each of the supports was dried, and thereafter each of them was calcinated at 800 °C for 3 hours, thereby forming Co-aluminate in which Co was dissolved in the alumina-coating layer. Thus, a plurality of honeycomb supports were prepared which had the Co-aluminate thereon.

Then, each of the honeycomb supports having the Co-aluminate thereon was immersed into a barium acetate aqueous solution. After taking each of the supports out of the aqueous solution, each of them was blown to blow away the water droplets in excess. After the blowing, each of the supports was dried, and thereafter each of them was calcinated at 500 °C for 3 hours, thereby loading Ba thereon. Catalysts identified with Nos. 11 through 15 in Table 3 below were thus prepared. Table 3 also sets forth the loading amounts of Co and Ba on each of the catalysts.

Except that a potassium acetate aqueous solution was used instead of the barium acetate aqueous solution, catalysts identified with No. 16 in Table 3 were prepared in the same manner as the catalysts identified with Nos. 11 through 15. The loading amounts of Co and K are also set forth in Table 3.

Except that either Sr or La substituted for Ba, two kinds of catalysts identified with Nos. 17 and 18 in Table 3 were prepared in the same manner as the catalysts identified with Nos. 11 through 15. Note that the loading amount of Co was identical with that of the catalysts identified with No. 13.

Except that each of the honeycomb supports having the alumina coating layer was immersed into a cobalt nitrate aqueous solution, and that, after taking each of them out of the solution, blowing each of them to blow away water droplets in excess and drying each of them, each of them was calcinated at 500 °C for 3 hours, comparative catalysts identified with Nos. 19 through 21 which were free from the formation of Co-aluminate were produced in the same manner as the catalysts identified with Nos. 11 through 15. Note that the loading amounts of Co and Ba were identical with those of the catalysts identified with Nos. 11 through 13, respectively.

The comparative catalysts identified with Nos. 19 through 21 relate to the catalysts which are prepared according to the first aspect of the present invention.

### Examination for Purifying Performance

Each of catalysts Nos. 11 through 18 as well as comparative catalysts Nos. 19 through 21 was disposed in an exhaust line of an actual vehicle equipped with a lean burn engine. The lean burn engine had a displacement of 1.6 liters. The vehicle was driven in the urban area running mode, for instance, it was alternately driven in the 10-mode for a certain period of time and then in the 15-mode for another certain period of time, thereby examining the catalysts for the conversion of HC, CO and NOₓ. The results of the examination are also summarized in the columns designated at "Initial Conversion" in Table 3.

After the aforementioned examination, each of catalysts Nos. 11 through 18 as well as comparative catalysts Nos. 19 through 21 was subjected to a bench test on durability which utilized the same type of engine as above. Namely, each of them was disposed in an exhaust line of the engine, and then the engine was run for 50 hours at an air-fuel ratio A/F of 18 while adjusting the temperature of the exhaust gas introduced into each of the catalysts at 800 °C. After this bench test was over, each of them was again disposed in the exhaust line of the actual vehicle. The vehicle was driven in the same manner as described above, thereby examining the catalysts for the conversion of HC, CO and NOₓ after a durability test. The results of the examination are also summarized in the columns designated at "Conversion after Durability Test" in Table 3. Note that, in the bench test on durability, a fuel was used which contained sulfur in an amount of 30 ppm.

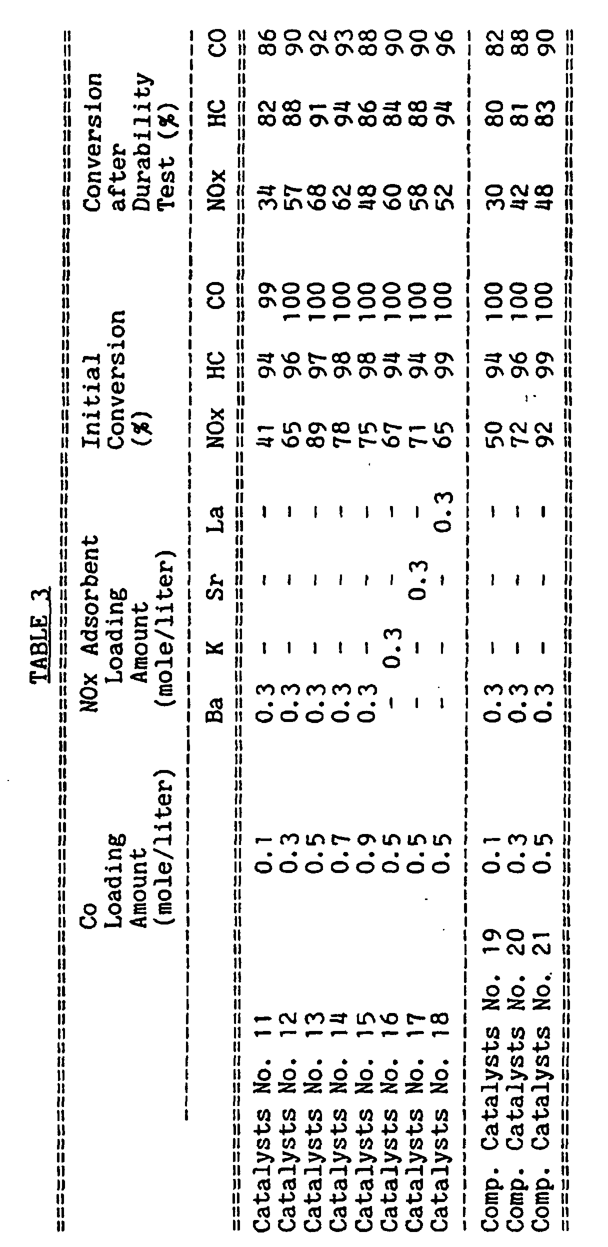

It is apparent from Table 3 that the exhaust-purifying process employing comparative catalysts Nos. 19 through 21 was superior to the exhaust-gases-purifying process employing the catalysts Nos. 11 through 18 obtained according to the Second Preferred Embodiment in terms of the initial NOₓ conversion, but that in the comparative exhaust-gases-purifying process the conversions deteriorated to large extent after the durability test. It is believed that, in comparative catalysts Nos. 19 through 21, the Co is caused to react with the alumina by the heat (800 °C) developed during the durability test, thereby producing compounds which degrade the Co in terms of its activity.

On the other hand, in the exhaust-gases-purifying process employing the catalysts Nos. 11 through 18 obtained according to the Second Preferred Embodiment, the NOₓ conversion degraded less even after the durability test. In particular, in the exhaust-gases-purifying process employing the catalysts obtained according to the Second Preferred Embodiment, whose Co dissolving amount fell in range of from 0.3 to 0.7 moles with respect to 1 liter of the honeycomb support, the NO_{X} conversion degraded least. Moreover, in the exhaust-gases-purifying process using the catalyst obtained according to the Second Preferred Embodiment, when the Co was loaded on the catalysts in an amount larger than that of the comparative catalysts Nos. 19 through 21, the initial NOₓ conversion was equivalent to that exhibited by the comparative exhaust-gases-purifying process employing the comparative catalysts.

Thus, even after the durability test, the NOₓ conversion can be apparently improved by including the Co in the form of Co-aluminate. This advantage is believed to be effected by inhibiting the NOₓ adsorbent from being poisoned and deteriorated by the sulfur.

## Claims

1. A process for producing an exhaust gas purifying catalyst which is simultaneously removing carbon monoxide, hydrocarbons and nitrogen oxides contained in said exhaust gas, by
preparing a support including a porous substance;
loading at least one NOₓ adsorbent selected from the group consisting of alkaline-earth metals, rare-earth elements and alkali metals on the support; and separately
loading at least one element selected from the group consisting of copper in an amount of 0.1 mol/L to 0.5 mol/L with respect of 1 liter of the support and cobalt in an amount of 0.1 mol/L to 0.3 mol/L with respect to 1 liter of the support on the support.

2. The process according to Claim 1, wherein the support includes at least one porous substance selected from the group consisting of alumina, zeolite, zirconia, silica-alumina, silica and the combinations therof.

3. The process according to Claim 1 or 2, wherein the support is constituted of at least one porous substance selected from the group consisting of alumina, zeolite, zirconia, silica-alumina, silica and the combinations therof.

4. The process according to Claim 2, wherein at least one porous substance selected from the group consisting of alumina, zeolite, zirconia, silica-alumina, silica and the combinations thereof is coated on a surface of a honeycomb body which is made of at least one member selected from the group consisting of cordierite and heat resistant metal.

5. The process according to any of Claims 1 to 4, wherein at least one alkaline-earth metal from the group consisting of Ba, Sr and Ca is loaded on the support as the NOₓ adsorbent.

6. The process according to any of Claims 1 to 5, wherein a rare-earth element from the group consisting of La, Y and Ce, is loaded on the support as the NOₓ adsorbent.

7. The process according to any of Claims 1 to 6, wherein an alkali metal from the group consisting of Li, K and Na, is loaded on the support as the NOₓ adsorbent.

8. The process according to Claim 1, wherein the NO_{X} adsorbent is loaded in an amount which is effective to adsorb NOₓ in exhaust gases whose oxygen concentrations are at the stoichiometric point or more than required for oxidizing CO and HC.

9. The process according to Claim 8, wherein the NO_{X} adsorbent is loaded in an amount of from 0.1 to 1.0 mole with respect to 1 liter of the support.

10. A process for producing an exhaust gas purifying catalyst which is simultaneously removing carbon monoxide, hydrocarbons and nitrogen oxides contained in said exhaust gas, by
preparing a cobalt-aluminate support wherein cobalt is dissolved in alumina in amount of from 0.3 to 0.7 moles with respect to 1 liter of the cobalt-aluminate support; and
loading at least one NOₓ adsorbent selected from the group consisting of alkaline-earth metals, rare-earth elements and alkali metals on the cobalt-aluminate support.

11. The process according to Claim 10, wherein the cobalt is dissolved in the alumina in an amount of from 0.3 to 0.5 moles with respect to 1 liter of the cobalt-aluminate support.

12. The process according to Claim 10, wherein at least one alkaline-earth metal from the group consisting of Ba, Sr and Ca is loaded on the cobalt-aluminate support as the NOₓ adsorbent.

13. The process according to Claim 10, wherein at least one rare-earth element from the group consisting of La, Y and Ce is loaded on the cobalt-aluminate support as the NOₓ adsorbent.

14. The process according to Claim 10, wherein at least one alkali metal from the group consisting of Li, K and Na is loaded on the cobalt-aluminate support as the NOₓ adsorbent.

15. The process according to Claim 10, wherein the NOₓ adsorbent is loaded in an amount which is effective to adsorb NOₓ in exhaust gases whose oxygen concentrations are at the stoichiometric point or more than required for oxidizing CO and HC.

16. The process according to Claim 15, wherein the NOₓ adsorbent is loaded in an amount of from 0.1 to 1.0 mole with respect to 1 liter of the cobalt-aluminate support.

## Patentansprüche

1. Verfahren zum Herstellen eines Abgasreinigungs-Katalysators, der gleichzeitig Kohlenmonoxid, Kohlenwasserstoffe und Stickoxide entfernt, die im Abgas enthalten sind, durch
Vorbereiten eines Trägers, der eine poröse Substanz aufweist;
Aufbringen auf dem Träger von mindestens einem NOₓ-Adsorptionsmittel, das aus der Gruppe bestehend aus Erdalkalimetallen, Seltenerdmetallen und Alkalimetallen ausgewählt ist; und separat davon
Aufbringen auf dem Träger von mindestens einem Element, das aus der Gruppe bestehend aus Kupfer in einer Menge von 0,1 Mol/L bis 0,5 Mol/L in Bezug auf 1 Liter des Trägers und Kobalt in einer Menge von 0,1 Mol/L bis 0,3 Mol/L in Bezug auf 1 Liter des Trägers ausgewählt ist.

2. Verfahren nach Anspruch 1, bei dem der Träger mindestens eine poröse Substanz aufweist, die aus der Gruppe bestehend aus Aluminiumoxid, Zeolith, Zirkoniumdioxid, Siliziumdioxid/Aluminiumoxid, Siliziumdioxid und den Kombinationen davon ausgewählt ist.

3. Verfahren nach Anspruch 1 oder 2, bei dem der Träger aus mindestens einer porösen Substanz besteht, die aus der Gruppe bestehend aus Aluminiumoxid, Zeolith, Zirkoniumdioxid, Siliziumdioxid/Aluminiumoxid, Siliziumdioxid und den Kombinationen davon ausgewählt ist.

4. Verfahren nach Anspruch 2, bei dem mindestens eine poröse Substanz, die aus der Gruppe bestehend aus Aluminiumoxid, Zeolith, Zirkoniumdioxid, Siliziumdioxid/Aluminiumoxid, Siliziumdioxid und den Kombinationen davon ausgewählt ist, auf eine Oberfläche eines Wabenkörpers beschichtet wird, der aus mindestens einem Bauteil gefertigt ist, das aus der Gruppe bestehend aus Cordierit und hitzebeständigem Metall ausgewählt ist.

5. Verfahren nach einem der Ansprüche 1 bis 4, bei dem mindestens ein Erdalkalimetall aus der Gruppe bestehend aus Ba, Sr und Ca als das NOₓ-Adsorptionsmittel auf den Träger aufgebracht wird.

6. Verfahren nach einem der Ansprüche 1 bis 5, bei dem ein Seltenerdmetall aus der Gruppe bestehend aus La, Y und Ce als das NOₓ-Adsorptionsmittel auf den Träger aufgebracht wird.

7. Verfahren nach einem der Ansprüche 1 bis 6, bei dem ein Alkalimetall aus der Gruppe bestehend aus Li, K und Na als das NOₓ-Adsorptionsmittel auf den Träger aufgebracht wird.

8. Verfahren nach Anspruch 1, bei dem das NOₓ-Adsorptionsmittel in einer Menge aufgebracht wird, die zum Adsorbieren von NOₓ in Abgasen wirksam ist, deren Sauerstoffkonzentration stöchiometrisch oder mehr als erforderlich zum Oxidieren von CO und HC ist.

9. Verfahren nach Anspruch 8, bei dem das NOₓ-Adsorptionsmittel in einer Menge von 0,1 bis 1,0 Mol in Bezug auf 1 Liter des Trägers aufgebracht wird.

10. Verfahren zum Herstellen eines Abgasreinigungs-Katalysators zum gleichzeitigen Entfernen von Kohlenmonoxid, Kohlenwasserstoffen und Stickoxiden, die im Abgas enthalten sind, durch
Vorbereiten eines Kobalt-Aluminat-Trägers, bei dem Kobalt in Aluminiumoxid in einer Menge von 0,3 bis 0,7 Mol in Bezug auf 1 Liter des Kobalt-Aluminat-Trägers gelöst ist; und
Aufbringen auf dem Kobalt-Aluminat-Träger von mindestens einem NOₓ-Adsorptionsmittel, das aus der Gruppe bestehend aus Erdalkalimetallen, Seltenerdmetallen und Alkalimetallen ausgewählt ist.

11. Verfahren nach Anspruch 10, bei dem das Kobalt im Aluminiumoxid in einer Menge von 0,3 bis 0,5 Mol in Bezug auf 1 Liter des Kobalt-Aluminat-Trägers gelöst ist.

12. Verfahren nach Anspruch 10, bei dem mindestens ein Erdalkalimetall aus der Gruppe bestehend aus Ba, Sr und Ca als das NOₓ-Adsorptionsmittel auf den Kobalt-Aluminat-Träger aufgebracht wird.

13. Verfahren nach Anspruch 10, bei dem mindestens ein Seltenerdmetall aus der Gruppe bestehend aus La, Y und Ce als das NOₓ-Adsorptionsmittel auf den Kobalt-Aluminat-Träger aufgebracht wird.

14. Verfahren nach Anspruch 10, bei dem mindestens ein Alkalimetall aus der Gruppe bestehend aus Li, K und Na als das NOₓ-Adsorptionsmittel auf den Kobalt-Aluminat-Träger aufgebracht wird.

15. Verfahren nach Anspruch 10, bei dem das NOₓ-Adsorptionsmittel in einer Menge aufgebracht wird, die zum Adsorbieren von NOₓ in Abgasen wirksam ist, deren Sauerstoffkonzentration stöchiometrisch oder mehr als erforderlich zum Oxidieren von CO und HC ist.

16. Verfahren nach Anspruch 15, bei dem das NOₓ-Adsorptionsmittel in einer Menge von 0,1 bis 1,0 Mol in Bezug auf 1 Liter des Kobalt-Aluminat-Trägers aufgebracht wird.

## Revendications

1. Procédé pour produire un catalyseur pour épurer des gaz d'échappement, qui élimine simultanément l'oxyde de carbone, les hydrocarbures et les oxydes d'azote contenus dans lesdits gaz d'échappement, consistant à
préparer un support comprenant une substance poreuse ;
charger sur le support au moins un adsorbant pour le NOₓ choisi dans le groupe constitué par les métaux alcalino-terreux, les éléments des terres rares et les métaux alcalins; et, séparément, à
charger sur le support au moins un élément choisi dans le groupe constitué par le cuivre, à raison de 0,1 moles / L à 0,5 moles / L pour 1 litre du support, et par le cobalt, à raison de 0,1 moles */* L à 0,3 moles */* L pour 1 litre de support.

2. Procédé selon la revendication 1, dans lequel le support comprend au moins une substance poreuse choisie dans le groupe constitué par l'alumine, la zéolithe, le zirconium, la silice-alumine, la silice et leurs combinaisons.

3. Procédé selon la revendication 1 ou la revendication 2, dans lequel le support est constitué par au moins une substance poreuse, choisie dans le groupe constitué par l'alumine, la zéolithe, la zircone, la silice-alumine, la silice et leurs combinaisons.

4. Procédé selon la revendication 2, dans lequel au moins une substance poreuse choisie dans le groupe constitué par l'alumine, la zéolithe, la zircone, la silice-alumine, la silice et leurs combinaisons est appliquée sur une surface d'un corps constitué de nids d'abeilles qui est réalisé en au moins un élément choisi dans le groupe constitué par la cordiérite et les métaux résistants à la chaleur.

5. Procédé selon l'une quelconque des revendications 1 à 4, dans lequel au moins un métal alcalino-terreux du groupe constitué par Ba, Sr et Ca est chargé sur le support en tant qu'adsorbant pour le NOₓ.

6. Procédé selon l'une quelconque des revendications 1 à 5, dans lequel un élément des terres rares du groupe constitué par La, Y et Ce est chargé sur le support en tant qu'adsorbant pour le NOₓ.

7. Procédé selon l'une quelconque ses revendications 1 à 6, dans lequel un métal alcalin du groupe constitué par Li, K et Na est chargé sur le support en tant qu'adsorbant pour le NOₓ.

8. Procédé selon la revendication 1, dans lequel l'adsorbant pour le NOₓ est chargé en une quantité qui permet d'adsorber efficacement le NOₓ de gaz d'échappement ayant une concentration en oxygène correspondant au point stoechiométrique ou supérieure à ce qui est nécessaire pour oxyder CO et CH.

9. Procédé selon la revendication 8, dans lequel l'adsorbant pour le NOₓ est chargé à raison de 0,1 à 1,0 moles pour 1 litre du support.

10. Procédé pour produire un catalyseur pour épurer des gaz d'échappement, qui élimine simultanément l'oxyde de carbone, les hydrocarbures et les oxydes d'azote contenus dans lesdits gaz d'échappement, consistant à
préparer le support de l'aluminate de cobalt dans lequel le cobalt est dissous dans l'alumine à raison de 0,3 à 0,7 moles pour 1 litre du support de l'aluminate de cobalt ; et à
charger au moins un adsorbant pour le NOₓ choisi dans le groupe constitué par les métaux alcalino-terreux, les éléments des terres rares et les métaux alcalins sur le support de l'aluminate de cobalt.

11. Procédé selon la revendication 10, dans lequel le cobalt est dissous dans l'alumine à raison de 0,3 à 0,5 moles par litre de support de l'aluminate de cobalt.

12. Procédé selon la revendication 10, dans lequel au moins un métal alcalino-terreux du groupe constitué par Ba, Sr et Ca est chargé sur le support de l'aluminate de cobalt en tant qu'adsorbant pour le NOₓ.

13. Procédé selon la revendication 10, dans lequel au moins un élément des terres rares du groupe constitué par La, Y et Ce est chargé sur le support de l'aluminate de cobalt en tant qu'adsorbant pour le NOₓ.

14. Procédé selon la revendication 10, dans lequel au moins un métal alcalin du groupe constitué par Li, K et Na est chargé sur le support de l'aluminate de cobalt en tant qu'adsorbant pour le NOₓ.

15. Procédé selon la revendication 10, dans lequel l'adsorbant pour le NOₓ est chargé en une quantité qui permet d'adsorber efficacement le NOₓ de gaz d'échappement ayant une concentration en oxygène correspondant au point stoechiométrique ou supérieure à ce qui est nécessaire pour oxyder CO et CH.

16. Procédé selon la revendication 15, dans lequel l'adsorbant pour le NOₓ est chargé à raison de 0,1 à 1,0 moles pour 1 litre du support de l'aluminate de cobalt.
